# EUROPEAN PATENT APPLICATION

(11) **EP 3 076 314 A1**
(43) Date of publication of application: **05.10.2016**
(21) Application number: 16163406.8
(22) Date of filing: 31.03.2016
(51) Int. Cl.: G06F 17/30, G06Q 10/06

(54) **SYSTEM, METHOD, AND PROGRAM FOR STORING AND ANALYSING A DATA GRAPH**

(30) Priority: 31.03.2015 GB 201505607
(71) Applicant: Fujitsu Limited, Kawasaki-shi, Kanagawa 211-8588 (JP)
(72) Inventor: HU, Bo, Winchester, SO23 7DT (GB); LEE, Vivian, Bracknell, Berkshire RG42 2QP (GB)
(74) Representative: Hutchison, James

(57) **Abstract**

Embodiments include a system comprising: a data storage apparatus configured to store a data graph comprising: a plurality of data nodes each representing a data item; a plurality of labelled data-data links each linking a pair of the data nodes and representing a relationship between the data items represented by the linked data nodes; a plurality of functional nodes each representing a procedure modifying a data item represented by one of the data nodes; a plurality of data-function links each linking one of the data nodes to one of the functional nodes and representing the procedure represented by the one of the functional nodes, when performed, modifying the data item represented by the one of the data nodes. The system further comprises a mapper, configured to receive a process description including an indication of a process start entity and an indication of a process end entity, to map the indication of the process start entity to a first data node from among the plurality of data nodes, and to map the indication of the process end entity to a second data node from among the plurality of data nodes; and a path finder, configured to analyse the data graph to find the shortest path from the first data node to the second data node along data-function links, and to output the shortest path.

## Description

The present invention is in the field of graph data storage and analysis. Specifically, the invention relates to the storage of functional and behavioural information in graph data form and the application of said storage.

As envisioned by the Big Data paradigm, a large amount of data is being generated by a growing number of devices at an ever-increasing rate. Better utilisation of Big Data can help industrial entities to achieve greater success by gaining more competitive advantages. In order to react promptly to the rapidly growing "Big Data", industrial entities need to increase the agility of their procedures. High-level business processes that are normally defined in relatively abstract terms can leave more room for manoeuvre in terms of adaption and customisation. On the other hand, instantiating a business process into a fine-grained workflow (with clearly defined tasks), requires extensive industry and domain-specific knowledge - hence industry analysts and domain experts. Thus, instantiation could be very expensive. In the mean time, decisions of the right level of instantiation can also be difficult to make: if the workflow is too fine-grained, it suffers unnecessary rigidity and can become inappropriate and quickly out-dated; if the workflow is too coarse-grained, local variants become prevalent, some of which can be undesired variants, which could expose users to low efficiency and high operational risks due to low traceability and interoperability. Furthermore, conventionally, industry process reinforcement or materialisation is normally purely process-centric, while in modern enterprise, data centric or data-driven paradigms are becoming widely adopted to provide transparency, agility and outcome-oriented thinking.

It is desirable to utilise linked data to instantiate industry processes.

Embodiments include: a system comprising: a data storage apparatus configured to store a data graph comprising: a plurality of data nodes each representing a data item; a plurality of labelled data-data links each linking a pair of the data nodes and representing a relationship between the data items represented by the linked data nodes; a plurality of functional nodes each representing a procedure modifying a data item represented by one of the data nodes; a plurality of data-function links each linking one of the data nodes to one of the functional nodes and representing the procedure represented by the one of the functional nodes, when performed, making a read or write access to the data item represented by the one of the data nodes. The system further comprises: a mapper, configured to receive a process description including an indication of a process start entity and an indication of a process end entity, to map the indication of the process start entity to a first data node from among the plurality of data nodes, and to map the indication of the process end entity to a second data node from among the plurality of data nodes; and a path finder, configured to analyse the data graph to find the shortest path from the first data node to the second data node along data-function links, and to output the shortest path.

Advantageously, the combined functions of the mapper and the path finder enable a process description indicating start and end entities to be transformed into a path of data items and procedures modifying those data items. Thus, a user submitting only a basic process description to the system can receive a workflow in return, the workflow charting a course of data items and procedures modifying those data items in order to go from a data item at the start of the process to a different data item at the end of the process. The functionalities of the mapper and path finder are enabled by the data modelling of the data graph stored by the data storage apparatus.

The system instantiates the process description by using the mapper and path finder to analyse the data graph stored in the data storage apparatus.

In data-driven domains, the traditional top-down industrial process instantiation is not strictly applicable to all cases: fine-grained workflows may be impractical or impossible due to a lack of a priori understanding of the domain of discourse, costs, and the resource constraints. On the other hand, pure dataflow approaches are not optimal when the volume of data to be processed is too large. Embodiments automate elements of the process of composing a flow of functions via a mechanism that utilises intrinsic data functionalities represented in a data graph of a data centric system. The system generates functional workflows based on an integration and interplay of both dataflow and control flow approaches.

When designing a processing model for a data-driven process, it is common that the designer only understands the process at a very coarse-grained level. The process models are then subject to instantiation by individuals who actually execute the processes. Embodiments take the high level model, in the form of a process description indicating start and end process entities, and enrich it using the data graph that combines data nodes and functional nodes, so that graph analysis algorithms (executed by the mapper and path finder) can automate the instantiation of the high level model. This instantiated workflow fulfils the high level model with fine-grained connections driven by data.

In summary, the system improves the efficiency of a pure dataflow model, relieves the manual intervention often required in process instantiation, and by using shortest path analysis offers an optimised workflow model based on intuitive functions of data represented in the data graph.

The data graph stored by the data storage apparatus extends a conventional data graph (the data nodes and data-data links), which stores only data state descriptions, by also storing functional nodes, which represent the functionality of the data items represented by the data nodes to which the functional nodes are linked. Thus, a functional node represents a procedure or function that is intrinsic to a data item represented by a data node. Each functional node represents a procedure that modifies a data item and correspondingly the procedure, when performed, modifies the state of the data node representing that data item. The functional node is linked in the data graph both to the data node that it modifies and to any data nodes representing inputs to the functional node, that is, data nodes representing data items that are operated on by the procedure of the functional node in order to generate the modifications.

Data storage paradigms which may be utilised by embodiments are set out in European patent application EP12191690.2 (published as EP2731020) and UK patent application number GB1504781.4.

The label of a data-data link describes the relationship between the two data nodes it links, or represents the relationship between the data items represented by the linked data nodes.

Functional nodes may be implemented by a processing unit. That is, the procedure represented by a functional node may be a procedure that is carried out by a processing unit that is a component of the system. Alternatively, the procedure may be carried out external to the system and the system notified once the procedure has been completed, for example by presenting a dialogue box to a user, so that once a notification of completion is received one or more of the data nodes linked to the functional node can be modified accordingly. How the data nodes linked to a functional node are to be modified upon completion of the procedure represented by the functional node may be defined in the functional node itself.

A data node may store measurements of physical properties (for example, a movement counter, temperature, power draw, data throughput) made by a sensor node (configured to transmit measurements to the data storage apparatus). A functional node may represent a procedure that analyses the measurements of one or more data nodes to which the functional node is linked, and outputs a result of the analysis (as an output of the apparatus, either to a user or to another apparatus).

The data graph stored by the data storage apparatus may also be referred to as a data-behaviour graph, because it represents not only data items and their states but how those data items are modified. The data graph may include an ontology definition (hierarchical in nature) and instantiation of that ontology definition.

The data graph represents a domain of knowledge. The domain represented by the graph includes data items, which may be documents, files, database entries, data signals, sensor measurements, or other forms of data, and also includes procedures which modify those data items. The modelling of the domain in the form specified in the above definition of the data storage apparatus provides a basis for the mapper and path finder components to convert a process description indicating an entity that starts the process and indicating an entity that ends the process, into a procedure-by-procedure path with defined inputs and outputs of each procedure to go from the start entity to the end entity. Furthermore the path finder uses a shortest-path algorithm to find the most efficient (or fewest steps) form of the process.

The system is configured to receive a process description. It is the receipt of the process description that triggers the operation of the mapper and the path finder. The process description may be submitted by a user, a user being a human user or an application authorised to access the system. The user may be prompted via an interface or otherwise to input an indication of an entity at the start of a process, and the entity at the end of a process, the entities and the process being within the domain represented by the data graph. For example, if the domain is the data stored by an industrial endeavour and the processing thereof, the entities at the start and end of the process should be entities relating to the operations of the industrial endeavour.

The path finder is configured to analyse the graph using a shortest path algorithm. Optionally, and possibly according to a user preference submitted in association with the process description, the k-shortest paths (k being a positive integer higher than one) may be of interest to a user, and hence the path finder may be configured to execute a k-shortest path finding algorithm to find the k shortest paths from the first data node to the second data node.

Optionally, each functional node may be connected by a data-function link to a data node representing a data item to which the procedure represented by the functional node, when performed, makes a read access, and to a data node representing another data item to which the procedure represented by the functional node, when performed, makes a write access. Thus, each functional node may be linked to at least two data nodes by data-function links. A link, be it a data-data link or a data-function link, stored at a node is an indication of an entity (node) at a different physical storage address from the node storing the link that is utilised by a processor performing processing on the node to access the data stored at the different physical storage address.

In a particular example of how the functional nodes may be stored and specified: each of the functional nodes specifies an input range of one or more data nodes from among the plurality of data nodes, a process, and an output range of one or more data nodes from among the plurality of data nodes, the specified process being triggered by a data modification event at a data node falling within the specified input range and resulting in a data modification event at a data node falling within the specified output range; the functional node being linked to each data node falling within the input range and to each data node falling within the output range by one of the plurality of data-function links.

The input range specified by a functional node defines the range of values that data items (or the data nodes representing them) must fall within to be accepted as an input to the procedure represented by the functional node. A value or range of values for one or more elements of the data node may be specified as an input range, with an assumption that an element for which no value or range of values is specified can take any value. Data nodes falling within the input range may be linked to the functional node in the data graph via a data-function link. It may be that the procedure represented by the functional node is triggered by a data modification event involving at a data node falling within the specified input range of a functional node. Other criteria determining whether or not the data modification event triggers the procedure may include, for example, a specification of the particular types or categories of data modification event that should occur in order for the procedure to be triggered. A data node within the input range of a functional node is an indication that the data node itself, or the data item represented by the functional node, is the subject of a read access in performing the process specified by the functional node.

The process specified by the functional node defines how the data graph is updated once completed. The process may also define processing steps which generate results that are used in updating the data graph. Alternatively, it may be that the process occurs externally to the system, and that information representing or being the result of the process is received by the system and used to update the data graph in the manner defined by the specified process. In either case, some processing is carried out by the system.

The output range defines the data item or data items that are modified by the process. The output range may specify a single data node or may be a group of data nodes such as a class (although that may be specified by a link to a single class-level data node). A value or range of values for one or more elements of the data node may be specified as an output range, with an assumption that an element for which no value or range of values is specified can take any value. Data nodes falling within the output range may be linked to the functional node in the data graph via a data-function link. A data node within the output range of a functional node is an indication that the data node itself, or the data item represented by the functional node, is the subject of a write access in performing the process specified by the functional node.

In a particular form of the data graph: the plurality of data-function links are directional, the direction being from the one or more data nodes in the input range to the functional nodes, and from the functional node to the one or more data nodes in the output range; and the path finder is configured to find the shortest path from the first data node to the second data node along the direction of the data-function links.

Advantageously, simply by the direction of the link between a data node and a functional node the relationship as an input-function or function-output can be determined. The input range of a functional node may be specified simply by the presence of a data-function link of a particular direction linking the functional node to a data node. Likewise, the output range of a functional node may be specified simply by the presence of a data-function link of a particular direction linking the functional node to a data node.

The presence of the directional information provided by directed data function links enables the path finder to restrict path finding analysis only to paths which are co-directional with the links composing the path.

In another example of how the data modelling may be performed in particular implementations: the data graph also includes: a plurality of directed function-function links each linking a pair of the functional nodes and representing that the output range of one of the functional nodes in the pair is within the input range of the other; the path finder being configured to analyse the data graph to find the shortest path from the first data node to the second data node along function-function and data-function links, and to output the shortest path.

Function-function links may appear for functional nodes for which the result generated by the process specified by the node is not itself stored in the data graph, but which nonetheless is a piece of information that is read by another functional node in performing its process.

In order to implement the functional nodes, the system may further comprise: a processing unit, the processing unit being configured to perform the modification process specified by a functional node when triggered by a data modification event falling within the specified input range of the functional node. The processing unit may comprise a processor and a volatile memory.

In addition to performing the process specified by a functional node, the processing unit may modify the data graph once the process has been performed, in a manner determined by the specification of the functional node. The processing unit provides a means to carry out processing instructions specified by the functional nodes.

Functional nodes may be triggered by data modification events, and to that end, the system may further comprise: a data modification event detector, configured to monitor the state of the data graph, to detect data modification events, and to compare the data modification events with the input ranges specified by the functional nodes, and to trigger a functional node when a data modification event is detected falling within the specified input range of the functional node.

Data state modification events may also be referred to as data modification events, data transformation events, or data state transformation events. The role of the data state modification detector is to observe the state of the data graph stored on the data storage apparatus and to detect when state changes occur which should trigger the process of a functional node.

For example, if a new value is added to the data graph at a data node falling within the input range of a functional node, then the new value (which may occur via modification of an existing value or by addition of a new data item) is a data modification event which is detected by the data state modification detector and the functional node triggered accordingly. The triggering may be, for example, by reporting the data modification event to a processing unit. The report may identify the functional node that has been triggered, or the processing unit may simply be informed of the detected modification event and then, by comparison with the specified input ranges of the functional nodes, be configured to determine which functional node to trigger.

Optionally, data modification events may be characterised into types, so that each data modification event is characterised as one of a predetermined set of data modification event types, and the data state modification detector is configured to provide an identification of the data node involved in the detected data modification event to the processing unit along with an indication of which one of the set of data modification event types was detected.

In detail, data modification event types may be some or all of: the amendment of, or addition of a new, object value in a data item falling within the input range; local transformations, that involve the subject of a resource, for example, creation of a new subject resource, deletion of an existing subject resource, modification of the resource, or modification of attributes of the subject resource; and/or connection transformations, including the deletion, creation of new, or modification of attributes of, interconnections between resources represented by the data graph.

Data modification event types may be grouped into two subsets as follows:
- Local transformation: deletion, creation, modification of attributes, of data items (resources represented by the data graph)
- Connection transformation: deletion, creation, modification of attributes, of data linkages (interconnections between resources represented by the data graph).

The path finder is configured to seek a path along data-function links, because such a path will alternate between data nodes and functional nodes, and thus, at each step, a data item is followed by a procedure, so an overall procedure and the data items generated at each step are revealed by the path. However, depending on the data graph and the process description, it may be that the path finder is not able to link the first and second data nodes using solely data-function links. In such cases: the path finder is configured, if no path is found along data-function links from the first data node to the second data node, to allow one or as few as possible data-data links to be included in the path, and to find the shortest path from the first data node to the second data node along data-function links and one or as few as possible data-data links; wherein the data-data links included in the path are restricted to data-data links for which the label of the labelled link indicates that, of the pair of data nodes linked by the data-data link, the data node closer to the second data node in the path is a parent concept of the data node closer to the first data node.

For example, the path finder may at the first instance analyse the data graph to find the shortest path connecting the first data node to the second node along a path containing data-function links and zero data-data links. If no path can be found, the path finder may increase the number of allowable data-data links by one at each analysis phase, until a path is found. That is to say, the number of allowable data-data links in the path may be a variable that, for each process description, begins at zero, and is increased by one each time the graph is analysed and no path found. The restriction of data-data links to those indicating a parent-child hierarchical relationship is based on the assumption that the parent and child data items should at least be compatible formats, so the overall process may still be workable.

In one example, the shortest path may be the path having the fewest component links. However, it may be that each link is attributed a link length, and hence the shortest path is the path with the shortest aggregate link length. In a particular example: each of the data-function links is attributed a link length; the shortest path found by the path finder being the path from the first data node to the second data node for which the aggregate link length of data-function links in the path is the lowest of all paths from the first data node to the second data node.

Advantageously, such embodiments enable the data modelling to influence the path finding, so that processes which are favourable, for example due to be being quick or cheap, can be attributed short link lengths, whereas higher link length values can be attributed to less favourable processes.

As a further example of how link lengths may be used, data-data links may be attributed link lengths, with the link lengths being longer than those attributed to data-function links (i.e. data-function links are attributed a link length in the range 0 to x, and data-data links are attributed link lengths that are always above y, wherein y>x). In such an embodiment, the path finder will naturally penalise data-data links and hence may be configured to find the shortest path from the first data node to the second data node without specific constraints on the type of link.

The process description includes at least an indication of a process start entity and a process end entity. The entities are then mapped to data items in the data graph and a process to get from the process start entity to the process end entity is extracted from the graph by the path finder and output. In a more complex example, it may be that the process description also includes one or more waypoints which define data items that should be present in the process in a specified order.

For example: the process description further includes an indication of one or more process waypoint entities, the mapper being configured to map each of the one or more indications of the process waypoint entities to a data node from among the plurality of data nodes as a waypoint data node; and the path finder being configured to analyse the data graph to find the shortest path from the first data node to the second data node via the or each of the waypoint entities along data-function links.

Advantageously, the option to indicate waypoint entities provides the user more flexibility over the output process. The waypoint entities may be received with an indication of the order in which they should appear in the path. Hence the path finder is configured to find component shortest paths, from the first data node to the first waypoint data node, from the first waypoint data node to the next waypoint data node, and so on, until there is no next waypoint data node and so the shortest path from the final waypoint data node to the second data node is found. These component shortest paths are then combined to form the shortest path from the first data node to the second data node that is output.

The mapper uses the indication of an entity provided in the process description to work out the data items represented by the data graph that need to be joined by the output path, the output path therefore representing a procedure or workflow to satisfy or instantiate the process description. In terms of how the mapping is performed, in a particular example: the mapper is configured to map an indication of an entity to a data node by using a semantic alignment algorithm to compare the indication of the entity with each data node in the data graph, or with a selected subset of data nodes from the data graph, and selecting the data node for which the comparison indicates the closest semantic alignment to the indication of the entity as the data node to which to map the indication of the entity, the indication of an entity being one or each of the indication of the process start entity, the indication of the process end entity, and/or the indication of the process waypoint entity.

The semantic alignment algorithm may be a string comparison algorithm. The mapper may perform pre-processing of the received process description and of the data nodes in order to generate strings for comparison.

The selected subset of nodes may be selected based on a pre-processing algorithm which is less computationally expensive than the semantic alignment algorithm, so that the semantic alignment algorithm is only performed for those data nodes satisfying the pre-processing algorithm. For example, the semantic description may specify a characteristic, or type (such as a computer file type or filename extension), of the process start/end/waypoint entity, so that only data nodes representing data items having that characteristic or being of that type are subject to the full semantic alignment algorithm.

Such a mapper is configured to map the indication of the process start entity to a first data node from among the plurality of data nodes, and to map the indication of the process end entity to a second data node from among the plurality of data nodes, by executing a semantic alignment algorithm to find the data node among the plurality of data nodes that generates the highest score when compared to the indication of the process start entity or the process end entity with the semantic alignment algorithm.

As an alternative to the mapper selecting the closest in terms of semantic alignment: the mapper may be configured to map an indication of an entity to one or more candidate data nodes, by using a semantic alignment algorithm to compare the indication of the entity with each data node in the data graph, or with a selected subset of data nodes from the data graph, and selecting the or each data node for which the comparison result exceeds a predetermined threshold as one of the one or more candidate data nodes to which to map the indication of the entity, the indication of an entity being one or each of the indication of the process start entity, the indication of the process end entity, and/or the indication of the process waypoint entity.

Thus, the mapper in this case outputs one or more candidate data nodes for each entity in the process description. If no data node can be found exceeding the predetermined threshold then the mapper may be configured to select the data node having the closest semantic alignment to the entity indication as the candidate data node.

The candidate data nodes may be used in different ways, in a first example, a shortest path may be found for each combination of candidate data nodes and those paths output. That is to say, the path finder is configured to analyse the data graph to find the shortest path from each of the candidate data nodes for the first data node to each of the candidate data nodes for the second data node along data-function links, via each candidate data node for each waypoint data node if any waypoint entities are included in the process description, and to output each of the found shortest paths.

Advantageously, in this example the output paths represent a range of processes satisfying the process description to a predetermined level of semantic confidence, and hence may all be of interest to a user.

In another example, it may be that the candidates are output to the user and a selection from among the candidates received. That is to say, for each indication of an entity for which more than one candidate data node is selected, the mapper is configured to output a representation of each of the more than one candidate data nodes, and to receive a nomination of a single data node from among the more than one candidate data nodes in response, the nomination being the data node to which the mapper maps the indication of the entity.

Advantageously, the nomination, which is assumed to be an input from a user, enables the path finder to proceed with confidence in the identity of the first and second data nodes, and the output path is more likely to suit the requirements of the user.

Embodiments of another aspect include: a method comprising: at a data storage apparatus, storing a data graph comprising: a plurality of data nodes each representing a data item; a plurality of labelled data-data links each linking a pair of the data nodes and representing a relationship between the data items represented by the linked data nodes; a plurality of functional nodes each representing a procedure modifying a data item represented by one of the data nodes; a plurality of data-function links each linking one of the data nodes to one of the functional nodes and representing the procedure represented by the one of the functional nodes, when performed, modifying the data item represented by the one of the data nodes. The method further comprises: receiving a process description including an indication of a process start entity and an indication of a process end entity, mapping the indication of the process start entity to a first data node from among the plurality of data nodes, and mapping the indication of the process end entity to a second data node from among the plurality of data nodes; and analysing the data graph to find the shortest path from the first data node to the second data node along data-function links, and outputting the shortest path.

Embodiments of another aspect include a computer program which, when executed by a computing apparatus, causes the computing apparatus to function as a system defined above or elsewhere in this document as an invention embodiment.

Furthermore, embodiments of the present invention include a computer program or suite of computer programs, which, when executed by a plurality of interconnected computing devices, cause the plurality of interconnected computing devices to perform a method embodying the present invention.

Embodiments of the present invention also include a computer program or suite of computer programs, which, when executed by a plurality of interconnected computing devices, cause the plurality of interconnected computing devices to function as a system defined above or elsewhere in this document as an invention embodiment.

Preferred features of the present invention will now be described, purely by way of example, with reference to the accompanying drawings, in which:-
Figure 1 illustrates a system embodying the present invention;
Figure 2 illustrates another system embodying the present invention;
Figure 3 illustrates a data graph stored by a data storage apparatus of an embodiment;
Figure 4 illustrates another data graph stored by a data storage apparatus of an embodiment;
Figure 5 illustrates a data graph representing a domain in an exemplary application of an embodiment; and
Figure 6 illustrates a hardware configuration of an embodiment.

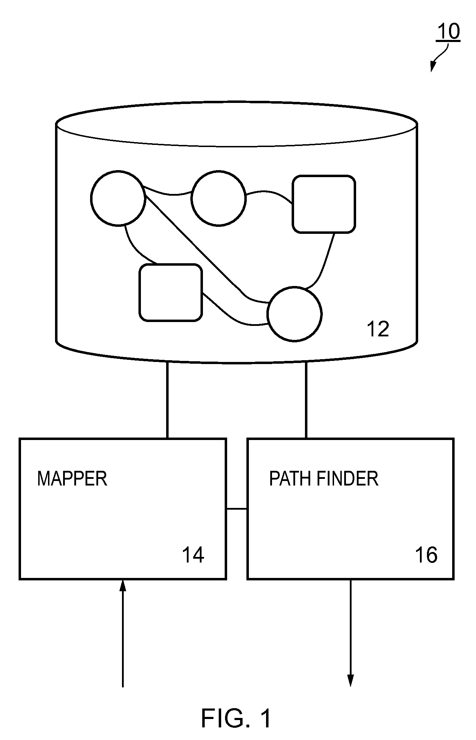

Figure 1 illustrates an embodiment. The system 10 of Figure 1 comprises the following components: a data storage apparatus 12, a mapper 14, and a path finder 16. The interconnections between those components illustrate the principle data exchanges, but other exchanges of data may occur.

In terms of hardware components, the system 10 may be considered to comprise a data storage apparatus 12, a processor, and a memory. Wherein, the data storage apparatus 12 can be realised via hardware comprising a data storage unit and a management system for the data storage unit. Depending on the amount of data stored, the data storage apparatus 12 may comprise a plurality of data storage units and one or more management systems. The management system controls access to the stored data.

The mapper 14 can be realised by executing stored processing instructions on a computing device, and hence in terms of hardware comprises some storage medium to store the processing instructions, a processor (to execute processing instructions), and a memory (for the storage of data during the execution of processing instructions).

The path finder 16 can be realised by executing stored processing instructions on a computing device, and hence in terms of hardware comprises some storage medium to store the processing instructions, a processor (to execute processing instructions), and a memory (for the storage of data during the execution of processing instructions).

The mapper 14 and the path finder 16 may each be functions performed by dedicated computing devices, or may be functions of a database management system responsible for the stored data graph. Such a database management system may be a single server, or may be distributed across a plurality of servers storing portions of the data graph.

The data storage apparatus 12 is configured to store data, and to provide an interface by which to allow read and write accesses to be made to the data. Specifically, the data storage apparatus 12 is configured to store a data graph representing interconnected nodes, wherein nodes can also be referred to as vertices or resources. In terms of how the data graph is encoded, the data graph may be encoded as a plurality of data items, for example are triples, each triple comprising a value for each of: a subject, being an identifier of a subject resource; an object, being either an identifier of an object resource or a literal value; and a predicate, being a named relationship between the subject and the object. The triples may be RDF triples (that is, consistent with the Resource Description Format paradigm) and hence the data storage apparatus 12 may be an RDF data store. Optionally, the data graph may be stored by a relational database. Regardless of the number of data storage units composing the data storage apparatus 12, or of the encoding paradigm, the data graph is accessible via an interface or portal to the mapper 14 and path finder 16 and optionally to other users. Users in this context and in the context of this document in general may be a human user interacting with the system 10 via a computer (which computer may provide the hardware realising some or all of the system 10 or may be connectable thereto over a network), or may be an application hosted on the same computer as some or all of the system 10 or connectable to the system 10 over a network (such as the internet), said application being under the control of a machine and/or a human user.

The data storage apparatus 12 is illustrated with an exemplary graph data excerpt. The functional nodes are illustrated as boxes with curved corners, and the circles are data nodes. Links between two data nodes are data-data links, and links between a data node and a functional node are data-function links.

The arrow incoming to the mapper 14 represents the receipt of a process description. The process description may be received via a user interface or be provided in some other way, and includes at least an indication of a process start entity and a process end entity. The process description may also include an indication of one or more process waypoint entities. The process description contains a user's indication of a process start entity and process end entity. That, is, in the user's words, the entities in the domain described by the data in the data graph that should be joined in a process. The mapper 14 is configured to use the indications input by the user to determine which data nodes in the data graph represent the entities (data items) for which the user wishes to see a process for getting from one to the other.

The indications provided by the user may include simply a name, in which case the mapper 14 is configured to access the data graph in order to find the data node that has a name property that is closest to the indication. The mapper 14 may execute a semantic alignment algorithm, for example, a string distance algorithm (such as the Jaro-Winkler string distance algorithm), to compare the indication with the names of the data nodes.

The indication may include information in addition to a name. For example, the indication may specify one or more data types or file types as which each of the entities may be stored. The mapper 14 may then restrict the data nodes that are compared with the name included in the indication to those representing data items that satisfy the one or more data types or file types specified in the entity indication.

Additional details included in the indication may be used either as a criterion for inclusion in the comparison process performed by the mapper 14, or as properties for comparison by the semantic alignment algorithm.

The mapper 14 may simply select the data node generating the highest result when compared with the indication using the semantic alignment algorithm. Alternatively, the mapper 14 may select a plurality of candidate data nodes each satisfying a minimum threshold result when compared with the indication using the semantic alignment algorithm. Those candidate data nodes may be output to the user as a prompt for a nomination, the nomination being received and used to select one of the candidate data nodes for use by the path finder 16. Alternatively, the path finder 16 may be instructed to find a path for each combination of candidate data nodes and to output all of the paths to the user.

The path finder 16 receives from the mapper 14 information identifying the two data nodes that are to be joined by the path, and optionally information identifying any waypoint data nodes that should be included in the path, and the order that the path should reach those waypoint data nodes.

If the mapper 14 provides the path finder 16 with information identifying more than one data node for any particular position in the path (start/end/waypoint), then the path finder 16 will attempt to find a path for each combination of data nodes.

The path finder 16 is configured to use a shortest path finding algorithm, or a k-shortest path finding algorithm, to find either the shortest or the k-shortest (k being a positive integer higher than one) route, along data-function links, between the data node selected as the start of the path (the first data node) and the data node selected as the end of the path, optionally via the one or more waypoint data nodes.

The path finder 16, which may also be referred to as a graph analysis engine, may measure path length simply by the number of links in the path. Alternatively, the links may each be stored with a value representing link length, the path finder 16 in that case being configured to measure path length by the aggregate of the link lengths of the component links in the path.

If the links are directed, then it may be that the path finder 16 is configured to find paths which are co-directional with the component links in the path. For example, data-function links may be directed so that a data node representing a data item that is an input to a procedure is connected to the functional node representing the procedure by a link directed from the data node to the functional node. Furthermore, data-function links may be directed so that a data node representing a data item that is an output of a procedure is connected to the functional node representing the procedure by a link directed from the functional node to the data node. It can be appreciated in this example that the path following the direction of the data function links will result in a path that traces the transformation of a data item from the data item represented by the first data node to the data item represented by the second data node.

In terms of outputting the shortest path, k-shortest paths, or shortest path per combination in a case where more than candidate data node per particular position is output by the mapper 14, the destination of the output is implementation specific, but as an example, the output destination is the user or terminal or interface from which the process description was received. In that sense, the process description is effectively a request for a path, and the path output by the path finder 16 is the response. The form of the output may be, for example, as a list of nodes on the path, the list detailing at least the name or some other details of the nodes. Alternatively or additionally, the path may be represented visually as one or more nodes (shapes) connected by links (arcs or lines). The output path represents a step-by-step process to go from a data item corresponding to the indication of the process start entity to a data item corresponding to the indication of the process start entity, optionally via the one or more waypoint entities.

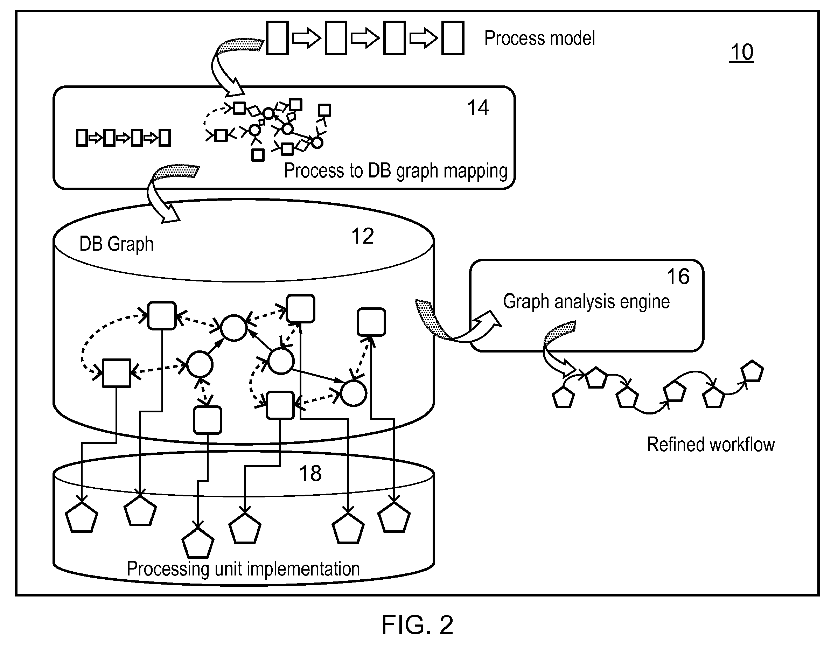

A particular embodiment is illustrated in Figure 2. In addition to the components included in the system 10 of Figure 1, the system 10 of Figure 2 includes a processing unit 18, which is a processing unit 18 configured to execute the processes represented by the functional nodes in the data graph and/or to update the data graph once the processes have been executed.

In the example of figure 2, data are modelled using the W3C Resource Description Framework (RDF) format. RDF sees the data model as triples (consisting subjects, predicates, and objects). Triples are connected effectively into a graph with vertices corresponding to subjects or objects, and edges corresponding to predicates. The RDF data model is, therefore, a directed, labelled graph (in some implementations, a root entity is introduced to ensure that the graph is connected).

The data graph stored by the data storage apparatus 12 includes nodes/vertices that can be categorised into two types: data nodes/vertices corresponding to data items in the domain represented by the data graph, and functional/behaviour/process nodes/vertices explicating the intrinsic functionality that the data items possess.

The functional data nodes define how a data item should respond to events caused by state changes within the data graph. Functional details of the actual process that is represented by a functional node can be implemented by native programming languages, e.g. Java. The purpose of processing steps defined by a functional node is to define what should be done with respect to particular data in terms of a particular type of state change. For instance, if the values of attributes (such as "age" or "name") of a person have changed, behaviours defined and associated with "person" vertex will respond to such changes and manifest the consequence of such changes in terms of further graph modifications.

RDF data model is a data-only graph, in the sense that the vertices are RDF representations of data entities corresponding to the existence of that data entity (also referred to as data item) in the domain of discourse. The data graph stored by the data storage apparatus 12 in embodiments extends the data-only graph with functional vertices corresponding to data behaviours, which capture the intuitive functions of data items. For instance, an RDF resource (data node) representing a simple calculator can demonstrate such kind of data behaviours in addition, subtraction, multiplication and division functions among others. These functions would be represented by functional nodes linking to object values upon which they operate.

The combination of data vertices and functional vertices, jointly compose the data graph stored by the data storage apparatus 12. This is formalised as follows: the data graph G_{D∪B} is a tuple 〈V_{d}, V_{b}, E_{d}, E_{b}, α, β〉, where V_{d} and E_{d} are the sets of data graph vertices and edges respectively. V_{b} is the set of vertices representing behaviour, and E_{b} is the set of edges associating behaviour with data, and alpha is a function mapping data-to-data edges (date-data links) α: E_{d} → V_{d} × V_{d} and beta is a function mapping data-to-function edges (data-function links) β: E_{b} → V_{d} × V_{b}. It is noted that although both E_{d} and E_{b} are edges, they have different semantics.

The input to the system 10 is a process model, which is an example of a process description. At least the process start entity and process end entity are indicated. In this example, two waypoint entities are also indicated. The waypoint entities represent aspects of the process being instantiated that are to be included in the output step by step path.

For each indicated entity, included and excluded data types are detailed. This excludes parts of the data graph from being included in the output data path. It may be that only particular filename extensions or types of data item are to be included in the output data path, and this is specified in the process model. The functions of the mapper 14 and path finder 16 then take into account the inclusions and exclusions specified by the process model.

The mapper 14 is configured to receive the process model and map the entity indications to data items represented in the data graph stored by the data storage apparatus 12. The data model may be stored as an RDF data model. The data nodes representing the data items to which the entity indications are mapped are start and end points of data processing threads which are to be instantiated by the path finder 16. For example, a process model specifying a process start entity, a process end entity, and two waypoints, comprises three separate data processing threads to be instantiated by the path finder 16 (start to first waypoint, first waypoint to second waypoint, and second waypoint to end). The mapper 14 finds a data node in the graph corresponding to each entity indicated in the process model. The data node corresponding to the process start entity is referred to as the first data node, the data node corresponding to the process end entity is referred to as the second node, and the data nodes corresponding to the process waypoint entities are referred to as waypoint data nodes, possibly with a prefix indicating order, i.e. first waypoint data node. The mapper 14 establishes these correspondences using a syntax-based semantic alignment such as string matching. The mapper 14 compares the entity indications from the process model with data names/labels and values of data nodes.

The path finder 16 is configured to find and output a path joining the data nodes to which the process model entities are mapped by the mapper 14. In particular, the path finder 16 is configured to seek the shortest path fulfilling certain constraints. Those constraints may include, for example, a restriction on the type of links that may be included in the path, and restriction on the data types that may be included. The path found by the path finder 16, and the paths from which the shortest is selected, may be referred to as Data-Behaviour Paths (shortened to DBP hereafter), and a DBP is a continuous path along links in the data graph. Specifically, a DBP should satisfy the constraint that the nodes on the path should alternate between data node and functional node. Alternatively put, the path should be composed of data-function links. Put formally, in order to be eligible for selection as the shortest path by the path finder 16:
Let p_{db} = 〈v₀,..., vᵢ,vⱼ,vₖ,... vₙ〉 be a data-behaviour path of arbitrary length, represented here by the vertices included on the path, which is an alternative representation to using links (edges).
Let G_{D∪B} be the data graph that is the union graph of both data nodes and functional nodes and the data-data links and data-function links.
For an arbitrary vertex (node) vₘ ∈ p_{db}, an entity x immediately precedence of vₘ, if x ≺ vₘ, x ∈ V_{b}, the entity is a behaviour vertex (functional node) and there is no other data vertex (data node) in between the behaviour and data items, if vₗ ∈ V_{b} ≺ vₙ ∈ V_{d}, ∄vₖ ∈ V_{d}.l < k < n. In other words, vertex vl is a functional node that immediately precedes vertex vn in the path. Vertex vn is a data vertex. There is no vertex vk that is a data vertex coming between data vertex vn and its preceding behaviour vertex vl. The same holds for the immediate succedent path item of vₘ.

In other words, the data-behaviour path is constrained from including continuous data items (i.e. cannot include data-data links) but can contain successive behaviour items. In certain embodiments, function-function links are included in the data graph, and these can be included in the DBP. A function-function link indicates that the output of one functional node is the input of another functional node, but the output is not in itself a data item that is represented in the data graph. This is based on the consideration, in which a plain dataflow-programming paradigm should pipe together functions, by allowing a succeeding process take directly from the output data of a precedent process.

The data-behaviour path can be found by the path finder 16 by applying an existing graph shortest path algorithm and excluding the data-data links by attributing them very large link lengths compared with the link lengths attributed to the data-function links. Otherwise a mask can be added to the data storage apparatus 12 to prevent the path finder 16 from seeing the data-data links.

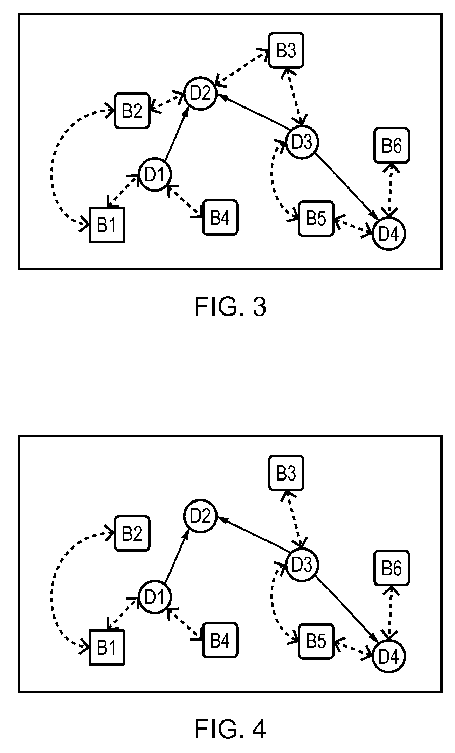

Figure 3 illustrates a data graph in which circles are data nodes (RDF resources), rounded squares are functional/behavioural/processing nodes, and solid arrows indicate conceptual relationships among RDF resources (e.g. "is-a" relationship and property references), and dotted arrows are data-function links or function-function links (connecting functional nodes with the involved resources or related functional nodes). When D1 and D4 are chosen as the first and second data nodes, a candidate DBP is 〈D1, B1, B2, D2, B3, D3, B5, D4), where behaviours (or processing units) will be connected to transform resource D1 into resource D4. The path finder 16 is configured to find and measure all candidate paths, and to output the shortest.

In a particular example of the path finder 16, the constraint restricting data-data links from being included in the DBP can be relaxed. Since in some implementations, data hierarchical structure can be observed and utilised (data with the same parents can be considered compatible in dataflow), the no-data-data links restriction can be relaxed.

The data nodes and data-data links of the data graph may form an underlying tree structure if only the "is-a" relationship and its equivalents are considered. When a strict DBP cannot be found with the constraint that data-data links cannot be included on the path, the constraints can be relaxed to allow a DBP to be found with one, or as few as possible, data-data links, and in particular, data-data links labelled with "is-a" or equivalent relationship indicator. Upon being output to the user by the path finder 16, the user may wish to refine any such path before arriving at a finalised workflow.

DBPs which include data-data links are based on the assumption that "is-a" relationships connect compatible data items and hence support the transformation of data without a defined function. DBPs including data-data links can be defined as follows:
Given an arbitrary vertex (data item) vₘ ∈ p'_{db}, if vₘ ∈ V_{d},
Either vₙ (where n = m + 1 or n = m - 1) vₙ ∈ V_{b}

Or Vₙ ∈ V_{d} ∧ (vₙ ⊏ vₘ ∨ vₘ ⊏ vₙ) ∧ (∄vₗ ≺ vₘ ≺ vₙ. vₙ ⊏ vₘ ∧ v₁ ⊏ vₘ)where ⊏ indicates "is-a" relationship.
Arbitrary vertices in the path are indicated by vₗ, vₘ, vₙ. V_{d} are the data nodes and V_{b} the functional nodes. The path is attributed a dash to indicate the relaxing of constraints.

The relaxing of constraints exercised by the path finder 16 in finding DBPs allows a data node to be substituted in the flow of functional links by a compatible data node, the compatibility being determined by the linking of the data nodes in the conceptual hierarchy (in the upward direction). For instance, if a DBP cannot be found, certain data nodes can be replaced by their parent concepts or ancestors to generate compatible paths. But the relaxation should only traverse the conceptual hierarchy along one direction (see Figure 4).

In case of the data graph of Figure 4, no DBP path can be found between D1 and D4. In that case, rather than outputting a shortest path, the path finder 16 will issue an alert to the user. For example, the user may wish to enrich the graph with new functional nodes.

Optionally, the system 10 maintains a record in a register of the data nodes to which process descriptions have been mapped and the corresponding shortest paths found by the path finder 16. When new data are added to the data graph, the path finder 16 is configured to recalculate the shortest path for each process description in the register, to adapt to the latest state of the data graph, and hence find the latest most efficient execution route.

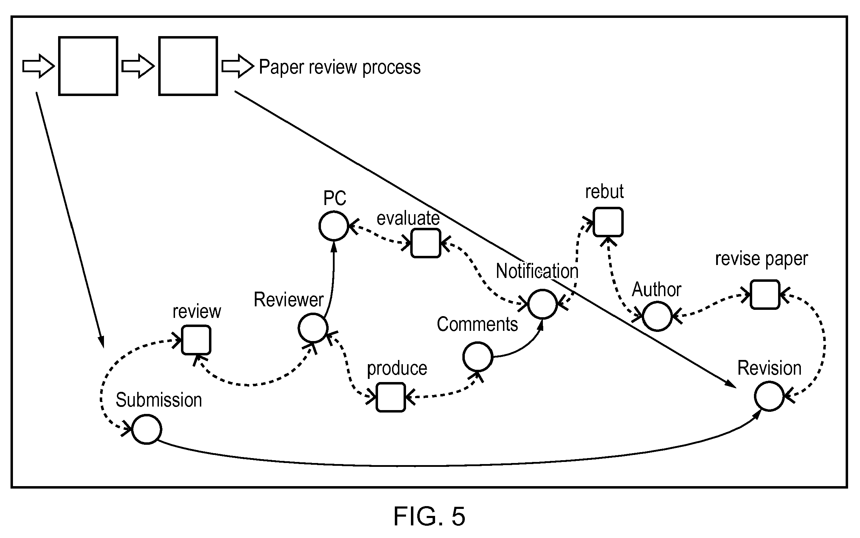

Figure 5 illustrates an example of how a system 10 of an embodiment may be put into effect. The domain of discourse represented by the data graph is the drafting of a paper that is submitted and revised. Submission is reviewed by reviewers who produce review comments. Reviewed papers are accepted with scores by the PC members. They are then revised into camera-ready copy and submitted as part of the conference proceedings. There are many different types of roles involved in such a process, e.g., authors, reviewers, PC members, conference organisers and publishers. These roles can be considered data items because they will have profiles on an electronic system. Each data item can have either reflexive behaviours (i.e. functional nodes involving only one data entity) or behaviour with multiple participants (i.e. functional nodes involving more than one data entity).

The process description is "Submission" to "Revision", although the indications could be given as, for example, "Submitted draft" and "revised draft" and the mapper 14 would use string matching to match the indications to the data nodes "Submission" and "Revision". Conceptually, it can be seen that the paper data item has evolved along time. In practice, the evolution is significant. Such data items are considered as different data entities, each corresponding to a snapshot of the data item at particular time (jointly composing the time series data domain).

When modelled in the data graph, among other vertices and edges, a fragment is illustrated in Figure 5. For a process with input matching to submission and output matching to revision, the path finder 16 is configured to find among other possible paths, one that navigates the graph as follows:
Submission -> review -> Reviewer -> PC -> evaluate -> Notification -> rebut -> Author - > revise paper -> Revision

This path can then be output to a user, which may perform further refinement, and used a workflow to implement the process description.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

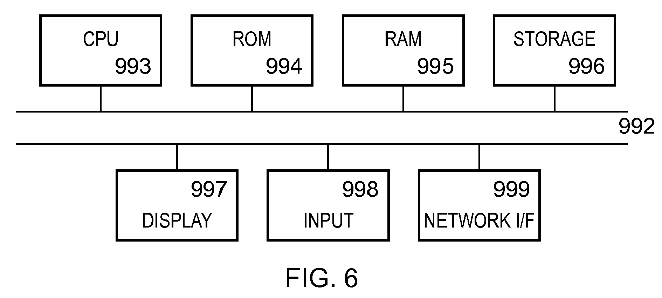

FIGURE 6 is a block diagram of a computing device, such as a data storage apparatus, which embodies the present invention, and which may be used to implement a method of an embodiment. The computing device comprises a computer processing unit (CPU) 993, memory, such as Random Access Memory (RAM) 995, and storage, such as a hard disk, 996. Optionally, the computing device also includes a network interface 999 for communication with other such computing devices of embodiments. For example, an embodiment may be composed of a network of such computing devices. Optionally, the computing device also includes Read Only Memory 994, one or more input mechanisms such as keyboard and mouse 998, and a display unit such as one or more monitors 997. The components are connectable to one another via a bus 992.

The CPU 993 is configured to control the computing device and execute processing operations. The RAM 995 stores data being read and written by the CPU 993. The storage unit 996 may be, for example, a non-volatile storage unit, and is configured to store data.

The display unit 997 displays a representation of data stored by the computing device and displays a cursor and dialog boxes and screens enabling interaction between a user and the programs and data stored on the computing device. The input mechanisms 998 enable a user to input data and instructions to the computing device.

The network interface (network I/F) 999 is connected to a network, such as the Internet, and is connectable to other such computing devices via the network. The network I/F 999 controls data input/output from/to other apparatus via the network.

Other peripheral devices such as microphone, speakers, printer, power supply unit, fan, case, scanner, trackerball etc may be included in the computing device.

The data storage apparatus may be embodied as functionality realised by a computing device such as that illustrated in Figure 6. The functionality of the data storage apparatus may be realised by a single computing device or by a plurality of computing devices functioning cooperatively via a network connection. An apparatus of an embodiment may be realised by a computing device having the hardware setup shown in Figure 6. Methods embodying the present invention may be carried out on, or implemented by, a computing device such as that illustrated in Figure 6. One or more such computing devices may be used to execute a computer program of an embodiment. Computing devices embodying or used for implementing embodiments need not have every component illustrated in Figure 6, and may be composed of a subset of those components. A method embodying the present invention may be carried out by a single computing device in communication with one or more data storage servers via a network.

The mapper may comprise processing instructions stored on a storage unit 996, a processor 993 to execute the processing instructions, and a RAM 995 to store information objects during the execution of the processing instructions.

The path finder may comprise processing instructions stored on a storage unit 996, a processor 993 to execute the processing instructions, and a RAM 995 to store information objects during the execution of the processing instructions.

The data storage apparatus may comprise processing instructions stored on a storage unit 996, a processor 993 to execute the processing instructions, and a RAM 995 to store information objects during the execution of the processing instructions.

The processing unit may comprise processing instructions stored on a storage unit 996, a processor 993 to execute the processing instructions, and a RAM 995 to store information objects during the execution of the processing instructions.

The data modification event detector may comprise processing instructions stored on a storage unit 996, a processor 993 to execute the processing instructions, and a RAM 995 to store information objects during the execution of the processing instructions.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A system comprising:
a data storage apparatus configured to store a data graph comprising:
a plurality of data nodes each representing a data item;
a plurality of labelled data-data links each linking a pair of the data nodes and representing a relationship between the data items represented by the linked data nodes;
a plurality of functional nodes each representing a procedure modifying a data item represented by one of the data nodes;
a plurality of data-function links each linking one of the data nodes to one of the functional nodes and representing the procedure represented by the one of the functional nodes, when performed, modifying the data item represented by the one of the data nodes; the system further comprising:
a mapper, configured to receive a process description including an indication of a process start entity and an indication of a process end entity, to map the indication of the process start entity to a first data node from among the plurality of data nodes, and to map the indication of the process end entity to a second data node from among the plurality of data nodes; and
a path finder, configured to analyse the data graph to find the shortest path from the first data node to the second data node along data-function links, and to output the shortest path.

2. A system according to claim 1, wherein
each of the functional nodes specifies an input range of one or more data nodes from among the plurality of data nodes, a modification process, and an output range of one or more data nodes from among the plurality of data nodes, the specified modification process being triggered by a data modification event at a data node falling within the specified input range and resulting in a data modification event at a data node falling within the specified output range;
the functional node being linked to each data node falling within the input range and to each data node falling within the output range by one of the plurality of data-function links.

3. A system according to claim 2, wherein
the plurality of data-function links are directional, the direction being from the one or more data nodes in the input range to the functional nodes, and from the functional node to the one or more data nodes in the output range; and
the path finder is configured to find the shortest path from the first data node to the second data node along the direction of the data-function links.

4. A system according to claim 2 or 3, wherein
the data graph further comprises:
a plurality of directed function-function links each linking a pair of the functional nodes and representing that the output range of one of the functional nodes in the pair is within the input range of the other.

5. A system according to any of claims 2 to 4, wherein the system further comprises:
a processing unit, the processing unit being configured to perform the modification process specified by a functional node when triggered by a data modification event falling within the specified input range of the functional node.

6. A system according to any of claims 2 to 5, wherein the system further comprises:
a data modification event detector, configured to monitor the state of the data graph, to detect data modification events, and to compare the data modification events with the input ranges specified by the functional nodes, and to trigger a functional node when a data modification event is detected falling within the specified input range of the functional node.

7. A system according to any of the preceding claims, wherein
the path finder is configured, if no path is found along data-function links from the first data node to the second data node, to allow one or as few as possible data-data links to be included in the path, and to find the shortest path from the first data node to the second data node along data-function links and one or as few as possible data-data links; wherein
the data-data links included in the path are restricted to data-data links for which the label of the labelled link indicates that, of the pair of data nodes linked by the data-data link, the data node closer to the second data node in the path is a parent concept of the data node closer to the first data node.

8. A system according to any of the preceding claims, wherein
each of the data-function links is attributed a link length;
the shortest path found by the path finder being the path from the first data node to the second data node for which the aggregate link length of data-function links in the path is the lowest of all paths from the first data node to the second data node.

9. A system according to any of the preceding claims, wherein
the process description further includes an indication of one or more process waypoint entities, the mapper being configured to map each of the one or more indications of the process waypoint entities to a data node from among the plurality of data nodes as a waypoint data node; and the path finder being configured to analyse the data graph to find the shortest path from the first data node to the second data node via the or each of the waypoint entities along data-function links.

10. A system according to any of the preceding claims, wherein
the mapper is configured to map an indication of an entity to a data node by using a semantic alignment algorithm to compare the indication of the entity with each data node in the data graph, or with a selected subset of data nodes from the data graph, and selecting the data node for which the comparison indicates the closest semantic alignment to the indication of the entity as the data node to which to map the indication of the entity, the indication of an entity being one or each of the indication of the process start entity, the indication of the process end entity, and/or the indication of the process waypoint entity.

11. A system according to any of claims 1 to 9, wherein
the mapper is configured to map an indication of an entity to one or more candidate data nodes, by using a semantic alignment algorithm to compare the indication of the entity with each data node in the data graph, or with a selected subset of data nodes from the data graph, and selecting the or each data node for which the comparison result exceeds a predetermined threshold as one of the one or more candidate data nodes to which to map the indication of the entity, the indication of an entity being one or each of the indication of the process start entity, the indication of the process end entity, and/or the indication of the process waypoint entity.

12. A system according to claim 11, wherein
the path finder is configured to analyse the data graph to find the shortest path from each of the candidate data nodes for the first data node to each of the candidate data nodes for the second data node along data-function links (via each candidate data node for each waypoint data node), and to output each of the found shortest paths.

13. A system according to claim 11, wherein
for each indication of an entity for which more than one candidate data node is selected, the mapper is configured to output a representation of each of the more than one candidate data nodes, and to receive a nomination of a single data node from among the more than one candidate data nodes in response, the nomination being the data node to which the mapper maps the indication of the entity.

14. A method comprising:
at a data storage apparatus, storing a data graph comprising:
a plurality of data nodes each representing a data item;
a plurality of labelled data-data links each linking a pair of the data nodes and representing a relationship between the data items represented by the linked data nodes;
a plurality of functional nodes each representing a procedure modifying a data item represented by one of the data nodes;
a plurality of data-function links each linking one of the data nodes to one of the functional nodes and representing the procedure represented by the one of the functional nodes, when performed, modifying the data item represented by the one of the data nodes; the method further comprising:
receiving a process description including an indication of a process start entity and an indication of a process end entity, mapping the indication of the process start entity to a first data node from among the plurality of data nodes, and mapping the indication of the process end entity to a second data node from among the plurality of data nodes; and
analysing the data graph to find the shortest path from the first data node to the second data node along data-function links, and outputting the shortest path.

15. A computer program which, when executed by a computing apparatus, causes the computing apparatus to perform the method of claim 14.
